# EUROPEAN PATENT APPLICATION

(11) **EP 3 971 638 A1**
(43) Date of publication of application: **23.03.2022**
(21) Application number: 20196452.5
(22) Date of filing: 16.09.2020
(51) Int. Cl.: G02F 1/35, G02F 1/365, G02F 1/39

(54) **METHOD FOR GENERATING HERALDED SINGLE-PHOTONS**

(71) Applicant: FRAUNHOFER-GESELLSCHAFT zur Förderung der angewandten Forschung e.V., 80686 München (DE)
(72) Inventor: Marques Muniz, André Luiz, 07743 Jena (DE); Steinlechner, Fabian, 07745 Jena (DE)
(74) Representative: Louis Pöhlau Lohrentz

(57) **Abstract**

It is claimed a method for the generation of heralded single photons with a heralded-photon frequency-mode fₕ comprising the steps
i) generation of correlated photon pairs, whereas each photon pair comprises a signal photon pₛ with a signal frequency-mode fₛ and an idler photon pᵢ with an idler frequency-mode fᵢ, whereas the signal photon pₛ and the idler photon pᵢ of each photon pair are correlated in the frequency-mode,
ii) frequency-to-time multiplexing of the signal photon pₛ, in order to delay the signal photon pₛ by a time τ depending on the signal frequency-mode fₛ,
iii) detection of the time τ of the signal photon pₛ by a detection means,
iv) frequency shift of the idler-frequency-mode fᵢ according to the time τ, in order to shift the idler-frequency mode fᵢ of the idler photon pᵢ into the heralded-photon frequency-mode fₕ, preferably by a frequency shift means.

## Description

The present invention provides a method for the generation of heralded single-photons according to the preamble of claim 1 and an apparatus for the generation of heralded single-photons according to the preamble of claim 15.

Heralded single-photons can be produced for example by spontaneous parametric down-conversion (SPDC) or spontaneous four-wave mixing (SFWM). Via spontaneous parametric down-conversion (SPDC) or spontaneous four-wave mixing (SFWM) correlated photon pairs with a signal photon and an idler photon can be generated, whereas detecting one of the photons of the pair "heralds" the presence of the other photon. Known heralded single-photon sources are limited by the probabilistic generation of a photon pair and by the generation of multiple photons, resulting in a probabilistic operation with a maximum success rate of several %. To overcome this limitation, other mechanisms like quantum dots can be used for the generation of single photons, or it is possible to multiplex a large number of stochastic sources distributed over many field modes, leading to a near-deterministic success of single-photon emission in at last one of the mode pairs. This is realized in known systems by frequency multiplexing, spatial multiplexing, or time multiplexing. Heralded single-photon sources can be used for a variety of applications for example for quantum networks.

It is an object of the present invention to provide an improved, more efficient, and cost-efficient method for the generation of heralded single-photons.

According to the present invention, the object is solved by a method for the generation of heralded single-photons according to claim 1 and by an apparatus according to claim 15.

This object is achieved by a method for the generation of heralded single photons with a heralded-photon frequency-mode fₕ comprising the steps
i) generation of correlated photon pairs, whereas each photon pair comprises a signal photon pₛ with a signal frequency-mode fₛ and an idler photon pᵢ with an idler frequency-mode fᵢ, whereas the signal photon pₛ and the idler photon pᵢ of each photon pair are correlated in the frequency-mode,
ii) frequency-to-time multiplexing of the signal photon pₛ, in order to delay the signal photon pₛ by a time τ depending on the signal frequency-mode fₛ,
iii) detection of the time τ of the signal photon pₛ by a detection means,
iv) frequency shift of the idler-frequency-mode fᵢ according to the time τ, in order to shift the idler-frequency mode fᵢ of the idler photon pᵢ into the heralded-photon frequency-mode fₕ, preferably by a frequency shift means.

The object is further achieved by an apparatus for the generation of heralded single photons comprising, a photon pair generation means, a detection means, a feed-forward signal, and a frequency shift means, whereas the photon pair generation means comprises a pump laser, preferably a pulsed pump laser, and a non-linear medium in order to produce photon pairs, whereas each photon pair comprises a signal photon with a signal frequency-mode fₛ and an idler photon with an idler frequency-mode fᵢ, whereas the signal photon and the idler photon of each photon pair are correlated in the frequency, whereas the detection means comprise a single photon detector in order to detect the time τ of the signal photon, preferably to detect the photon and the time τ, whereas the feed-forward signal comprises a controller to forward a signal from the detection means, preferably the signal of the time τ, to the frequency shift means, and whereas the frequency shift means comprises a non-linear element in order to shift the idler-frequency mode fᵢ into a heralded photon frequency-mode fₕ. According to the invention, the apparatus comprises a frequency-to-time multiplexer arranged between the photon pair generation means and the detection means, in order to delay the signal photon by a time τ depending on the signal frequency-mode fₛ.

The object is further achieved by an apparatus for the generation of heralded single photons adapted to provide the methods for the generation of heralded single photons with a heralded-photon frequency-mode fₕ.

The advantage of the invention is that the correlation of the frequency-modes of the signal and idler photon is translated into the time τ and used for the frequency shift. Due to that, a variety of signal frequency-modes fₛ and idler-frequency modes fᵢ can be used to generate heralded single photons with heralded-photon frequency-mode fₕ. This advantage is realized by the frequency-to-time multiplexing of the signal photon in step ii), this means the translation of the signal frequency-mode fₛ into the time τ. The time τ comprises the information of the signal frequency-mode fₛ of the signal photon, and due to the correlation of the signal and idler photon also the information of the idler frequency-mode fᵢ. For that, the frequency correlation of the photons of one pair in step i) is essential. This information of the time τ is used to shift the idler-frequency mode fᵢ in step iv) into a heralded-photon frequency-mode fₕ.

Another advantage of the invention is that only one detection means in step iii) is necessary for the detection of the signal photons. Signal photons with different signal frequency-mode fₛ are detected at different times due to the frequency-to-time multiplexing. This leads to a reduction of the cost to generate heralded single photons and a reduction in the size of the setup. In addition, different detection efficiencies and/or jitters from different detection means have not to be taken into account, which leads to a more precise generation of heralded single photons.

Another advantage of the invention is that the heralded single photons are generated out of one spatial mode which is advantageous for further use of the heralded single photons for example when coupled into a single-mode fiber.

The detection of the time τ in step iii) is realized by the detection of the signal photon. By the detection of the signal photon the presence of the idler photon is heralded. In step iv) the idler-frequency-mode fᵢ of the idler photon is shifted to the heralded-photon frequency-mode fₕ, in order to generate heralded single photons with the frequency-mode fₕ. Preferably a part of the generated heralded single-photons are used to analyze the purity of the heralded photon by a cascade of beam splitters and detectors after step iv) and/or after the frequency shift means.

In a preferred embodiment the signal frequency-mode fₛ and the idler frequency-mode fᵢ of the signal photon and the idler photon of one correlated photon pair have non-degenerated frequency-modes fₛ ≠ fᵢ. Preferably in step i) the signal photon and the idler photon are generated with non-degenerated frequency-modes fₛ ≠ fᵢ. Preferably the photon pair generation means produce a frequency correlated photon pair, namely a signal photon and an idler photon with non-degenerated frequency-modes fₛ ≠ fᵢ. Non-degenerated frequency-modes means that the signal frequency-mode fₛ and the idler frequency-mode fᵢ are not equal, meaning fₛ ≠ fᵢ. Frequency-mode means the frequency of the single photon. Frequency mode is the frequency of the photon, meaning the frequency of the photon out of the electromagnetic spectrum.
In a preferred embodiment, the idler photon in step iv) and the signal photon in step ii) and iii) are corresponding and correlated photons of one photon pair. Preferably one photon pair means one single photon pair.

In a preferred embodiment in step i) and/or in the photon pair generation means, the frequency correlation of the signal and idler photon of one pair is due to the energy conservation, preferably due to the energy conservation in the pair generation process. Preferably the signal frequency-mode fₛ and the idler frequency-mode fᵢ are correlated around a center wavelength fo.

In a preferred embodiment in step i) and in the photon pair generation means, the in frequency correlated signal and idler photon of one photon pair are in addition correlated and/or entangled in one or more degrees of freedom, preferably in polarization, and/or time, and/or frequency, and/or orbital angular momentum (OAM) or spin angular momentum (SAM), and/or in propagation path. For example, with a joint-spectral amplitude measurement the correlation in the frequency modes can be verified.

In a preferred embodiment the detection of the time τ in step iii) or in the detection means heralds the presence of the idler photon. Preferably by the detection of the time τ the signal photon is detected and heralds the presence of the idler photon of one pair.

In a preferred embodiment, the photon pairs are generated by pumping a non-linear medium, preferably a non-linear crystal or a non-linear waveguide, with a pump beam, or a pulsed pump beam, preferably a pump laser beam or a pulsed pump laser beam.

In a preferred embodiment, the photon pairs are generated by spontaneous four wave mixing (SFWM), preferably in a non-linear material or in a third-order non-linear crystal, or by spontaneous parametric down conversion (SPDC), preferably in a second-order non-linear crystal.

In a preferred embodiment, the non-linear material for spontaneous four wave mixing (SFWM) is a photonic crystal fiber, and/or a waveguide structure and/or a microresonator preferably for integrated optics based on silica, silica on silicon, silicon, silicon on insulator, silicon nitride and oxynitride, polymers, semiconductors such as GaAs, InP, GalnAsP, GaN.

In a preferred embodiment, the non-linear crystal is a periodically poled potassium titanyl phosphate (ppKTP), or a periodically poled lithium-niobate crystal (PPLN), or a periodically poled silica fiber (PPSF), or a Barium borate (BBO) crystal.

In a preferred embodiment, the signal-frequency-mode fₛ and the idler-frequency-mode fᵢ, of the signal and idler photon of one correlated photon pair is the mode n out of a multitude of possible signal-frequency-modes fₛₙ and idler-frequency-modes fin, with n = 1, 2, 3, ....

In a preferred embodiment, the signal-frequency-mode fₛ and the idler-frequency-mode fᵢ, with mode n out of a multitude of possible signal-frequency-modes fₛₙ and idler-frequency-modes fin, with n = 1, 2, 3, ... lead to the steps
ii) frequency-to-time multiplexing of the signal photon, in order to delay the signal photon by a time τn depending on the signal frequency-mode fₛₙ,
iii) detection of the time τn of the signal photon by a detection means,
iv) frequency shift of the idler-frequency-mode fin according to the time τn, in order to shift the idler-frequency mode fin into the heralded-photon frequency-mode fₕ, preferably by a frequency shift means.

In a preferred embodiment the signal-frequency-modes fₛₙ and idler-frequency-modes fin are correlated in frequency due to the energy conservation, preferably due to the energy conservation in the pair generation process. This means, that for n = 1 the signal-frequency-mode fₛ₁ and idler-frequency-mode fᵢ₁ are correlated, and for n = 2 the signal-frequency-mode fₛ₂ and idler-frequency-mode fᵢ₂ are correlated, and so on. Preferably, the signal-frequency-modes fₛₙ and the idler-frequency-modes fin are correlated around the center wavelength fo.

Preferably, n is an arbitrary integer number.

In a preferred embodiment in step i)
a) signal and idler photons with the signal-frequency-mode fₛ and the idler-frequency-mode fᵢ are generated, or
b) signal and idler photons with a broad frequency spectrum are generated, whereas the broad frequency spectrum comprises a multitude of possible signal-frequency-modes fₛₙ and idler-frequency-modes fin which includes the signal-frequency-mode fₛ and the idler-frequency-mode fᵢ.

In a preferred embodiment for a), the signal-frequency-mode fₛ and the idler frequency-mode fᵢ of one photon pair are generated out of a multitude of possible signal-frequency-modes fₛₙ and idler-frequency-modes fin, whereas the multitude of possible signal-frequency-modes fₛₙ and idler-frequency-modes fin are determined by one or more pump beams and/or one or more non-linear media and/or one or more possible pair production wavelength of one or more non-linear media. The multitude of possible signal-frequency-modes fₛₙ and idler-frequency-modes fin determined by one or more pump beams and/or one or more non-linear media means, that a non-linear medium pumped by more pump beams with different frequencies can generate different signal-frequency-modes fₛₙ and idler-frequency-modes fin according to the pump beam frequency fₚₙ, and/or that by using more non-linear crystals or waveguides with non-linear material in a row pumped by one pump beam each non-linear crystal can generate different signal-frequency-modes fₛₙ and idler-frequency-modes fin according to the crystal.

In a preferred embodiment for b), the signal-frequency-mode fₛ and the idler frequency-mode fᵢ of one pair are selected out of the broad frequency spectrum by a spectral separation of the signal-frequency-mode fₛ and/or the idler frequency-mode fᵢ, preferably by a filter, or a grating, or a dispersive element, and/or a cavity, preferably by the frequency-to-time multiplexing in step ii).

In a preferred embodiment, one or more pulsed laser with variable wavelength or different wavelengths are used to characterize the frequency-to time multiplexing and/or the detection. For the characterization laser beam pulses are sent through the apparatus or used for the steps ii) and iii) of the method, whereas the different times τ are compared for different frequency modes of the laser beam pulses.

Preferably the photon pair source is a pulsed photon pair source and preferably only one pair per time interval is generated in step i) and/or the photon pair generation means. Preferably the time interval is in the range of 10 ps to 100 ms, preferably 1 ns to 100 ns, more preferably 5 ns to 50 ns. The times down to ps can be resolved by a superconducting nanowire single photon detector. Preferably the repetition rate of the photon pair generation is in the range of up to 50 MHz.

In a preferred embodiment in step i), the signal and idler photons are spatially separated either by a wavelength division multiplexer, or by a polarization means, or by a dichroic mirror, or by a 50/50 beam splitter, or by a non-collinear spatial generation in a non-linear crystal.

In a preferred embodiment, the photon pair generation means comprise a spatial separation means, preferably a wavelength division multiplexer, or a polarization means, or a dichroic mirror, or a 50/50 beam splitter, or a non-linear crystal for non-collinear spatial generation, in order to separate the signal and idler photons spatially.

In a preferred embodiment in step ii), the frequency-to-time multiplexing is realized by a delay of the signal photon by the time τ depending on the signal frequency-mode fₛ, preferably by the time τn depending on the signal frequency-mode fₛₙ, preferably by a delay due to the dispersion in a dispersive means.

In a preferred embodiment, the frequency-to-time multiplexing is realized by a frequency-to-time multiplexing means.

In a preferred embodiment, the frequency-to-time multiplexing means comprise a dispersive means in order to delay of the signal photon by the time τ depending on the signal frequency-mode fₛ, preferably by the time τn depending on the signal frequency-mode fₛₙ.

In a preferred embodiment, the dispersive means is a reflective or transitive Bragg grating, and/or a diffraction grating, and/or a filter, and/or a grating, and/or a dispersive element, and/or a cavity, and/or a fiber Bragg grating with a circulator.

In a preferred embodiment, the dispersive means causes a reduction or an extension of the flight time of the signal photon depending on the signal frequency-mode fₛ, and/or a reduction or an extension of the spatial path of the signal photon depending on the signal frequency-mode fₛ, and/or reduction or an extension of the transmission velocity of the signal photon depending on the signal frequency-mode fₛ, and/or a re-direction of the signal photon depending on the signal frequency-mode fₛ.
Preferably the dispersive means causes different reductions or extensions of the flight time of the signal photons depending on the different signal frequency-modes fₛₙ, and/or reduction or extension of the spatial path of the signal photons depending on the different signal frequency-modes fₛₙ, and/or reduction or an extension of the transmission velocity of the signal photons depending on the different signal frequency-modes fₛₙ, and/or a re-direction of the signal photon depending on the different signal frequency-modes fₛₙ.

In a preferred embodiment for each signal-frequency-mode fₛₙ there is one dispersive means, or for a multitude of signal-frequency-mode fₛₙ there is one dispersive means.

In a preferred embodiment, the dispersive means comprise one dispersive element for each signal-frequency-mode fₛₙ, or one dispersive element for a multitude of signal-frequency-mode fₛₙ.

In a preferred embodiment, the dispersive means are n-times Bragg gratings, one Bragg grating for each signal-frequency-mode fₛₙ.

In a preferred embodiment, the dispersive means is a fiber Bragg grating, preferably a fiber Bragg grating for different frequency-modes fₙ with n gratings. Preferably, the fiber Brag grating is linear chirped or discrete chirped. Preferably, the fiber Bragg grating is arranged in an input/output of a fiber circulator.

In a preferred embodiment, the fiber circulator comprises a first input/output where the signal photon enters the circulator, and
a second input/output connected to the fiber Bragg grating where the signal photon leaves the fiber circulator and is reflected in the fiber Bragg grating and enters the circulator again on the second input/output, and
a third input/output where the signal photon leaves the fiber circulator with a delay time τ, preferably towards the detection means.

In a preferred embodiment, the delay time τ is introduced to the signal photon by the fiber Bragg grating, preferably by the variation of the refractive index in the fiber. Preferably, different delay times τn for different signal-frequency-modes fₛₙ are introduced by the fiber Bragg grating with n gratings gₙ in the fiber, whereas the different gratings gₙ are arranged spatially behind one another, preferably by different variations of the refractive index which are located one after the other for different wavelength in the fiber Bragg grating.

One advantage of the fiber brag grating with a circulator is that the delay times can be much longer, which can be resolved with high jitter single-photon detectors.

In a preferred embodiment, the time τ, preferably the time τₙ, of the signal photon detected in step iii) or in the detection means is determined by the time of the detection of the signal photon, preferably by the detection means.

In a preferred embodiment, the time τ of the signal photon in step iii) is determined by the detection of the signal photon and the comparison of the detection time with a trigger signal. The trigger signal preferably sets the time in the detection means at which a photon with no delay time τ would be detected. Preferably the trigger signal can be used in addition to trigger the photon pair generation means

In a preferred embodiment, the trigger signal, preferably an electronic trigger signal, is generated by the pump laser or a pulse generator. Preferably, the pulse generator triggers the pump laser and the detection means, in order to compare the detection time of the signal photon with the trigger to determine the time τ, preferably the time τn.

In a preferred embodiment, the trigger signal is a trigger laser pulse with a known frequency, detected by the detection means. The trigger laser pulse is preferably generated by a trigger laser. The trigger laser pulse can be inserted in the generation means, or bevor the frequency-to time multiplexer, or after the frequency-to time multiplexer. The known frequency of the trigger laser ensures a constant frequency-to time multiplexing in step ii). The detection means detects the trigger laser pulse and the signal photon pₛ and compares the times of both detection events to evaluate the time τ. The trigger laser and the pair generation means are synchronized.

In a preferred embodiment, the apparatus comprises a trigger generator, preferably arranged in the laser or the detection means or as a separate element in order to trigger the generation of the photon pairs and/or is used as a reference signal to determine the time τ.

In a preferred embodiment the time τ is in the range of 10 ps to 100 ns, preferably 100 ps to 50 ns, preferably 1 ns to 10 ns.

In a preferred embodiment, in step ii) or in the frequency to time multiplexing means, the signal photon with the signal-frequency-mode fₛₙ is delayed by the time τn, with n = 0, 1, 2, ..., whereas preferably the time τn is n times the time τ.

In a preferred embodiment each signal-frequency-mode fₛₙ is assigned to a corresponding time τn, preferably by the frequency-to-time multiplexing.

In a preferred embodiment, the detection in step iii) is realized by a photon detector, preferably by only one single-photon detector. Preferably the single-photon detector can be a superconducting nanowire single-photon detector, or a photon multiplier, or a Geiger counter, or a single-photon avalanche diode, or a transition edge sensor, or a scintillation counter.

In a preferred embodiment, the detection means can be a single-photon detector, preferably a superconducting nanowire single-photon detector, or a photon multiplier, or a Geiger counter, or a single-photon avalanche diode, or a transition edge sensor, or a scintillation counter.

In a preferred embodiment the time τ in step iii) is converted into an electrical signal, whereas the electrical signal is used as a feed-forward signal to control the frequency shift in step iv), whereas the conversion is realized by the detection means or by the controller.

In a preferred embodiment, a signal of the time τ or the feed forward signal is sent from the detection means or the controller to the frequency shifting means in order to shift the frequency of the idler-frequency-mode fᵢ in step iv) according to the time τ.

In a preferred embodiment, the frequency shift in step iv) is realized by phase modulation of the idler-frequency mode fᵢ, preferably by an acousto-optic modulator, and/or an electro-optic modulator, and/or a phase modulator, and/or a Lithium niobate (LN) phase modulator.

In a preferred embodiment, the frequency shift means is an acousto-optic modulator, and/or an electro-optic modulator, and/or phase modulator and/or a non-linear medium, and/or a Lithium niobate (LN) phase modulator.

In a preferred embodiment, the phase modulation by the acousto-optic modulator, and/or the electro-optic modulator, and/or the phase modulator, and/or the Lithium niobate (LN) phase modulator is realized by a non-linear medium on which a linear phase ramp which is controlled depending on time τn. Concerning the linear phase ramps: A fast Fourier transformation of a ramp signal in the time domain results in a frequency swift in the frequency domain. The frequency can be shifted to the higher or lower frequency, depending on the slope of that ramp signal.

In a preferred embodiment, the linear phase ramp for the phase modulation is controlled depending on time τ.

In a preferred embodiment, the frequency shift in step iv) is realized by four-wave mixing with a variably input beam, or by Bragg scattering four-wave mixing (BS-FWM) with a variably input beam, preferably in a non-linear medium.

In a preferred embodiment, the frequency shift means is realized by a non-linear crystal or a non-linear waveguide, or a non-linear element for Bragg scattering four-wave mixing (BS-FWM).

In a preferred embodiment, the input beam for four-wave mixing or for Bragg scattering four-wave mixing (BS-FWM) is controlled depending on time τn.

The four-wave mixing process is an optical process in which two or three frequency modes interact and produce two or one new frequency modes. To shift the idler-frequency mode fᵢ to the heralded-photon frequency-mode fₕ a laser beam with a corresponding frequency-mode interacts with the idler-frequency mode fᵢ in a non-linear material whereas in addition a third constant laser beam can interact with the corresponding frequency-mode and the idler-frequency mode fᵢ. Depending on the idler-frequency mode fᵢ and the to be produced heralded-photon frequency-mode fₕ the frequency of the laser with the corresponding frequency-mode has to be chosen.

In a preferred embodiment an input beam for Bragg scattering four-wave mixing (BS-FWM) is controlled depending on time τ.

In a preferred embodiment of the apparatus the photon pair generation means is adapted to perform step i), and/or the frequency-to-time multiplexer is adapted to perform step ii), the detection means is adapted to perform step iii), and or the frequency shift means is adapted to perform step iv) of the method for the generation of heralded single photons. Preferably, the feed-forward control is adapted to control the frequency shift means according to the detection means.

The invention can be used for example for optical communication in free-space and/or fiber, and/or for the establishment of a quantum key generation (QKD) and/or for quantum cryptography, and/or quantum computing, and/or quantum memory, and/or quantum imaging.

The above and other aspects, features and advantages of the present invention will become more apparent from the following detailed description when taken in conjunction with the accompanying drawings.

### Brief Description of the Drawings:

- Fig. 1:: schematic diagram of the steps and the apparatus for the generation of heralded single photons;
- Fig. 2:: schematic diagram of the signal, idler and heralded-photon frequency-mode;
- Fig. 3:: schematic diagram of the signal, idler and heralded-photon frequency-modes for n=3 modes;
- Fig. 4:: an embodiment of an apparatus for the generation of heralded single photons;

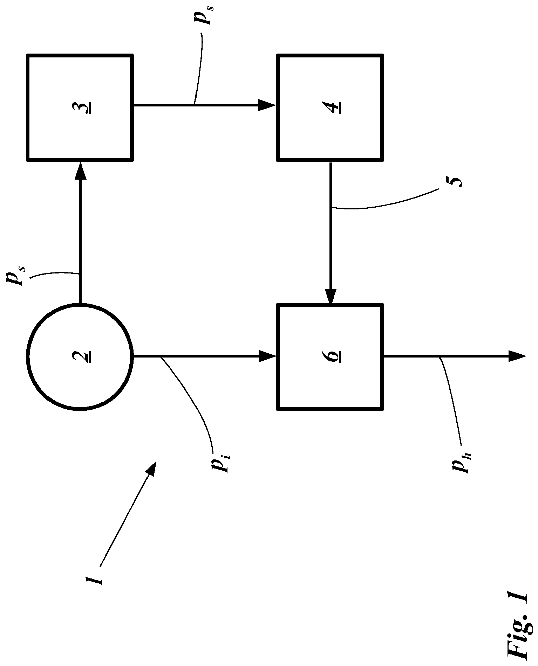

Fig. 1 shows the method and the apparatus for the generation of heralded single photons 1 in a schematic diagram. The objective of the invention is to generate heralded single photons pₕ with a heralded-photon frequency-mode fₕ.

In a photon pair generation means 2 the correlated photon pairs of step i) of the method are generated. Each photon pair comprises a signal photon pₛ with a frequency-mode fₛ and an idler photon pᵢ with an idler frequency-mode fᵢ. The signal photon pₛ and the idler photon pᵢ are generated in such a way that the signal photon pₛ and the idler photon pᵢ of each photon pair are correlated in their frequency-mode, for example centered around a center frequency-mode fo. In addition, the signal frequency-mode fₛ and the idler frequency-mode fᵢ can have non-degenerated frequency-modes, meaning the frequency-modes are not equal, meaning fₛ ≠ fᵢ. In a separation means 22 the signal photon pₛ and the idler photon pᵢ are separated spatially. The signal photon pₛ is guided towards a frequency to time multiplexing means 3. The idler photon pᵢ is guided towards a frequency shift means 6.

In the frequency to time multiplexing means 3 the signal photon pₛ is delayed by a time τ depending on the signal frequency-mode fₛ according to step ii) of the method. The delayed signal photon pₛ is then guided toward the detection means 4. In the detection means 4 the delayed signal photon pₛ is detected by a detector according to step iii) of the method. With the detection of the signal photon pₛ the time τ by which the photon was delayed is known by the system. A feed-forward signal 5 with the information of the time τ is sent to the frequency shift means 6.

The knowledge of the time τ can be obtained by the detection time of the signal photon pₛ and a trigger signal. The trigger signal sets the time in the detection means at which a photon with no delay time τ would be detected. The trigger signal can be used in addition to trigger the photon pair generation means 2.

The idler photon pᵢ is delayed between the photon pair generation means 2 and the frequency shift means 6 to arrive in the frequency shift means 6 simultaneously with the feed-forward signal 5. In the frequency shift means 6 the idler-frequency-mode fᵢ of the idler photon pᵢ is shifted according to the time τ to the heralded-photon frequency-mode fₕ according to step iv) of the method. By the frequency shift, a heralded single-photon pₕ with a heralded-photon frequency-mode fₕ is obtained.

In the system in fig. 1 the frequency correlation of the signal photon pₛ and idler photon pᵢ is translated by the frequency to time multiplexing means 3 into a time τ. The time τ comprises the information of the signal frequency-mode fₛ of the signal photon, and due to the correlation of the signal and idler photons also the information of the idler frequency-mode fᵢ. With this knowledge, the time τ is used to shift the frequency of the idler photon pᵢ to the requested heralded-photon frequency-mode fₕ.

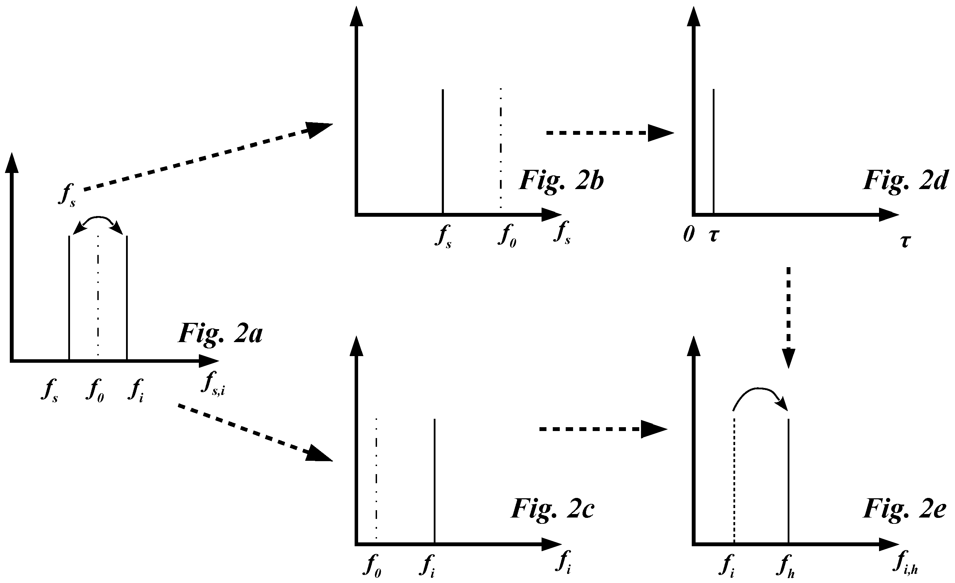

Fig. 2 shows a schematic diagram of the signal, idler and heralded-photon frequency-modes and the correlations to each other.

Fig. 2a, 2b and 2c show the signal-frequency-mode fₛ and idler-frequency-mode fᵢ of the signal photon pₛ and the idler photon pᵢ generated in the photon pair generation means 2. The signal-frequency-mode fₛ and idler-frequency-mode fᵢ are correlated and in this example non-degenerated and centered around a center frequency-mode fo. Due to the frequency to time multiplexing in step ii) in the frequency to time multiplexing means 3 and the detection of the signal photon pₛ in the detection means 4 the signal-frequency-mode fₛ is translated into the time τ shown in Fig. 2d, whereas 0 is the time the signal photon pₛ would be detected with no frequency to time multiplexing. The knowledge of the time τ is used in the frequency shift means 6 in step iv) to shift the idler-frequency-mode fᵢ towards the heralded-photon frequency-mode fₕ shown in Fig. 2e.

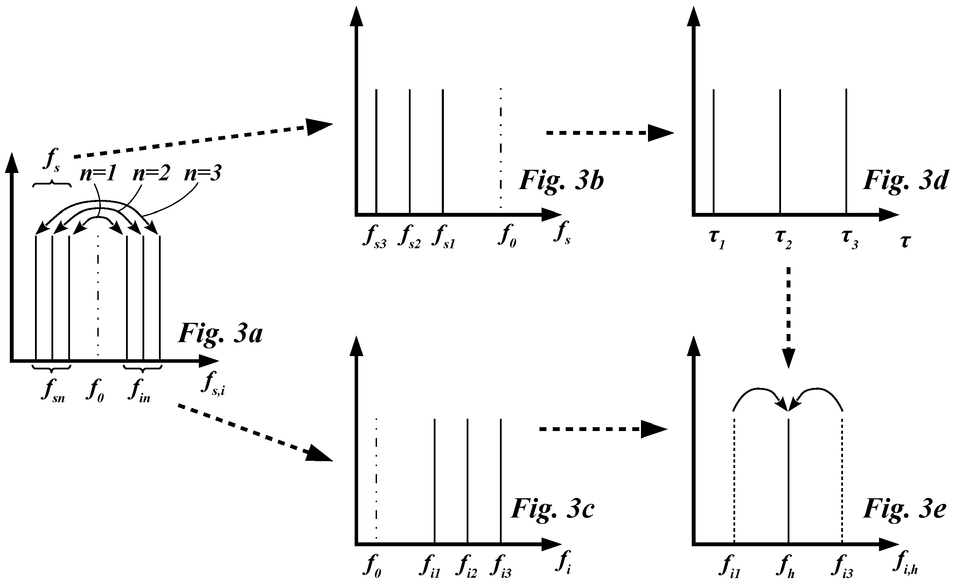

Fig. 3 shows a schematic diagram of a multitude of the signal, idler and heralded-photon frequency-modes n and the correlations to each other. The fig. 3 differs from the figure 2 only in that the signal photon pₛ and the idler photon pᵢ have the signal-frequency-mode fₛ and idler-frequency-mode fᵢ out of a multitude of possible signal-frequency-modes fₛₙ and idler-frequency-modes fin. In this example for three possible modes n = 1, n = 2 and n = 3, whereas the modes n can be an arbitrary integer number depending on the generation process or the time to frequency multiplexing process. The signal-frequency-modes fₛₙ and idler-frequency-modes fin in fig. 3 are in this example correlated and non-degenerated and centered around a center frequency-mode fo shown in Fig. 3a, 3b and 3c. Fig. 3d shows the translation of the signal-frequency-modes fₛₙ into the times τₙ, whereas each signal-frequency-mode fₛ corresponds to the time τ according to the mode n. Fig. 3e shows the frequency shift of the idler-frequency-mode fin towards the heralded-photon frequency-mode fₕ according to the times τₙ. In the example of fig. 3 the heralded-photon frequency-mode fₕ is equal to the idler-frequency-modes fᵢ₂. It is also possible that none of the idler-frequency-modes fin is equal to the heralded-photon frequency-mode fₕ and thus all idler-frequency-modes fin have to be shifted towards the heralded-photon frequency-mode fₕ.

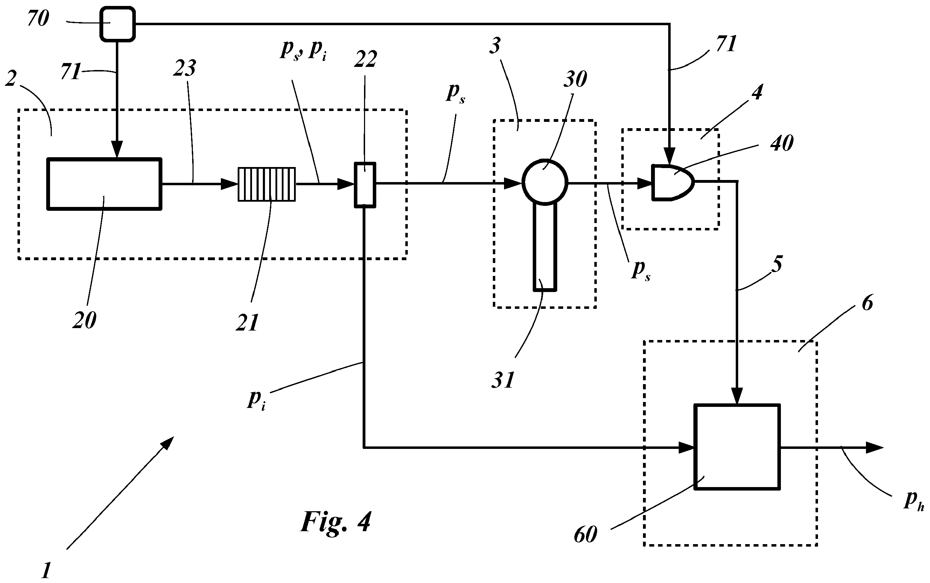

Fig. 4 shows an apparatus for the generation of heralded single photons 1 comprising the photon pair generation means 2, the frequency to time multiplexing means 3, the detection means 4, the feed-forward signal 5 and the frequency shift means 6.

The photon pair generation means 2 comprise in the example of fig. 4 a pulsed laser 20 pumping a nonlinear medium 21 with a pulsed pump beam 23. In the nonlinear medium 21 photon pairs with a signal photon pₛ and idler photons pᵢ are generated. The laser 20 is triggered by a trigger signal 71 generated in the example of fig. 4 by a trigger generator. The trigger signal 71 is in the example of fig. 4 also used to trigger the detection means 4 for a reference signal. The trigger signal sets the time in the detection means at which a photon with no delay time τ would be detected.

Due to the non-degenerated frequency-modes of the signal photon pₛ and idler photon pᵢ in the example of fig. 4, the signal photon pₛ and idler photon pᵢ are separated spatially by a separation means 22 according to their frequency. In the example of fig. 4, the separation means 22 is a wavelength division multiplexer. The source can be a fiber photon pair generation source or a free space fiber generation source.

The signal photon pₛ in the example of fig. 4 is guided in a fiber to the frequency to time multiplexing means 3. The frequency to time multiplexing means 3 in fig. 4 comprise a fiber circulator 30 and a fiber Bragg grating 31. The signal photon pₛ enters the fiber circulator 30 at a first input and is guided towards a second input/output of the fiber circulator 30 where the fiber Bragg grating 31 is located. In the fiber Bragg grating 31 the signal photon pₛ is reflected according to the signal-frequency-mode fₛ. In the example of fig. 4 the fiber Bragg grating 31 is discrete chirped. In the discrete chirped fiber Bragg grating 31 the reflection of photons with a specific wavelength is achieved by the variation of the refractive index in the fiber, whereas different variations of the refractive index are located one after the other for different wavelength. The discrete chirped fiber Bragg grating reflects the wavelength in discrete steps, meaning photons with different wavelengths reflected by the fiber Bragg grating have different delay times τₙ when the signal photon pₛ arrives at the second input/output after the reflection. This means, signal photons pₛ travel different long distances in the fiber Bragg grating 31 to the reflection (depending on the wavelength) and back again. The signal photon pₛ then leaves the fiber circulator 30 at a third input/output and is guided via fiber to the detection means 4.

The delayed signal photon pₛ is detected in the detection means 4 by a single photon detector 40. Due to the trigger signal 71 from the trigger generator 70 the delay time τ is determined. The detection means 4 sends the feed-forward signal 5, which contains the knowledge of the delay time τ to the frequency shift means 6.

The idler photon pᵢ is guided from the separation means 22 via fiber to the frequency shift means 6. On the way towards the frequency shift means 6 the idler photon pᵢ is delayed in a delay line (not shown in fig. 4) in order to arrive at the frequency shift means 6 to a time, where the frequency mode of the idler photon pᵢ can be shifted with the knowledge of the feed-forward signal 5 to the heralded photon frequency-mode fₕ.

The frequency shift in the frequency shift means 6 in the example of fig. 4 is realized by a nonlinear crystal, preferably a Lithium niobate (LN) crystal on which a linear phase ramp, according to the delay time τ is applied. The frequency shift can also be realized by Bragg scattering four-wave mixing (BS-FWM).

In a variation of the example of fig. 4 the trigger signal can be sent to a controller, which also receives the time stamp of the detection of the signal photon pₛ from the detection means 4. The controller compares both time events and evaluates the delay time τ. Then the controller sends the feed-forward signal 5 to the frequency shift means 6.

The project leading to this application has received funding from Project QCTech, Fraunhofer Internal grant Attract #604178.

### Reference signs:

- 1: apparatus for the generation of heralded single-photons
- 2: photon pair generation means
- 3: frequency to time multiplexing means
- 4: detection means
- 5: feed-forward signal
- 6: frequency shift means
- 20: Laser
- 21: nonlinear crystal
- 22: separation means
- 23: pump beam
- 30: fiber circulator
- 31: fiber Bragg grating
- 40: detector
- 60: phase modulator
- 70: trigger generator
- 71: trigger signal
- pₛ: signal photon
- pᵢ: idler photon
- pₕ: heralded single-photon
- fₛ: signal frequency-mode
- fᵢ: idler frequency-mode
- fₕ: heralded-photon frequency-mode
- n: mode number
- fₛₙ: signal frequency-modes
- fᵢₙ: idler frequency-modes
- f₀: center frequency-mode
- τ: time

## Claims

1. Method for the generation of heralded single photons with a heralded-photon frequency-mode fₕ comprising the steps
i) generation of photon pairs, whereas each photon pair comprises a signal photon pₛ with a signal frequency-mode fₛ and an idler photon pᵢ with an idler frequency-mode fᵢ, whereas the signal photon pₛ and the idler photon pᵢ of each photon pair are correlated in the frequency-mode
**characterized by the steps**
ii) frequency-to-time multiplexing of the signal photon pₛ, in order to delay the signal photon by a time τ depending on the signal frequency-mode fₛ,
iii) detection of the time τ of the signal photon pₛ by a detection means (4),
iv) frequency shift of the idler-frequency-mode fᵢ according to the time τ, in order to shift the idler-frequency mode fᵢ of the idler photon pᵢ into the heralded-photon frequency-mode fₕ, preferably by a frequency shift means (6).

2. Method for the generation of heralded single photons according to claim 1,
**characterized in that**
the idler photon pᵢ in step iv) and the signal photon pₛ in step ii) and iii) are corresponding and correlated photons of one photon pair.

3. Method for the generation of heralded single photons according to claim 1 or 2,
**characterized in that**
the photon pairs are generated by pumping a non-linear medium, preferably a non-linear crystal (21), with a pump beam (23), or a pulsed pump beam, preferably a pump laser beam or a pulsed pump laser beam.

4. Method for the generation of heralded single photons according to claims 1 to 3,
**characterized in that**
the signal-frequency-mode fₛ and the idler-frequency-mode fᵢ, of the signal photon pₛ and idler photon pᵢ of one correlated photon pair are the mode n out of a multitude of possible signal-frequency-modes fₛₙ and idler-frequency-modes fin, with n = 1, 2, 3, ....

5. Method for the generation of heralded single photons according to claims 1 to 4,
**characterized in that**
in step i)
a) signal and idler photons with the signal-frequency-mode fₛ and the idler-frequency-mode fᵢ are generated, or
b) signal and idler photons with a broad frequency spectrum are generated, whereas the broad frequency spectrum comprises a multitude of possible signal-frequency-modes fₛₙ and idler-frequency-modes fin which includes the signal-frequency-mode fₛ and the idler-frequency-mode fᵢ.

6. Method for the generation of heralded single photons according to claims 1 to 5,
**characterized in that**
in step i) the signal and idler photons are spatially separated by a separation means (22), preferably by a wavelength division multiplexer, or by a polarization means, or by a dichroic mirror, or by a 50/50 beam splitter, or by a non-collinear spatial generation in a non-linear crystal.

7. Method for the generation of heralded single photons according to claims 1 to 6,
**characterized in that**
in step ii) the frequency-to-time multiplexing is realized by a delay of the signal photon by the time τ depending on the signal frequency-mode fₛ, preferably by the time τn depending on the signal frequency-mode fₛₙ, preferably by dispersion in a dispersive means.

8. Method for the generation of heralded single photons according to claims 1 to 7,
**characterized in that**
the dispersive means is a reflective or transitive Bragg grating, and/or a diffraction grating, and/or a filter, and/or a grating, and/or a dispersive element, and/or a cavity, and/or fiber Bragg grating with a circulator.

9. Method for the generation of heralded single photons according to claims 1 to 8,
**characterized in that**
the time τ, preferably the time τn, of the signal photon in step iii) is determined by the time of the detection of the signal photon, preferably by the detection of the signal photon and the comparison of the detection time with a trigger signal

10. Method for the generation of heralded single photons according to claims 1 to 9,
**characterized in that**
the detection in step iii) is realized by only one photon detector (4), preferably by only one single-photon detector, preferably the-single photon detector is a superconducting nanowire single photon detector, or a photon multiplier, or a Geiger counter, or a single-photon avalanche diode, or a transition edge sensor, or a scintillation counter.

11. Method for the generation of heralded single photons according to claims 1 to 10,
**characterized in that**
the time τ in step iii) is converted into an electrical signal, whereas the electrical signal is used as a feed-forward signal (5) to control the frequency shift in step iv), preferably to control the frequency shift means (6).

12. Method for the generation of heralded single photons according to claims 1 to 11,
**characterized in that**
the frequency shift in step iv) is realized by phase modulation of the idler-frequency mode fᵢ, preferably by an acousto-optic modulator, and/or an electro-optic modulator, and/or a phase modulator, and/or a Lithium niobate (LN) phase modulator, or
the frequency shift in step iv) is realized by a four-wave mixing, or by Bragg scattering four-wave mixing (BS-FWM).

13. Method for the generation of heralded single photons according to claims 1 to 12,
**characterized in that**
the phase modulation is realized by a non-linear medium on which a linear phase ramp is applied, or
the frequency shift is realized by four-wave mixing with a variably input beam, or by Bragg scattering four-wave mixing (BS-FWM) with a variably input beam.

14. Method for the generation of heralded single photons according to claims 1 to 13,
**characterized in that**
the input beam for Bragg scattering four-wave mixing (BS-FWM) is controlled depending on time τ, or the linear phase ramp for phase modulation is controlled depending on time τ.

15. Apparatus for the generation of heralded single photons (1), preferably for implementing a method according to one of the claims 1 to 14,
comprising, a photon pair generation means (2), a detection means (4), a feed-forward signal (5), and a frequency shift means (6),
whereas the photon pair generation means (2) comprises a pump laser (20), preferably a pulsed pump laser, and a non-linear medium (21) in order to produce photon pairs, whereas each photon pair comprises a signal photon pₛ with a signal frequency-mode fₛ and an idler photon pᵢ with an idler frequency-mode fᵢ, whereas the signal photon pₛ and the idler photon pᵢ of each photon pair are correlated in the frequency,
whereas the detection means (4) comprise a single photon detector in order to detect the time τ of the signal photon pₛ, preferably to detect the signal photon pₛ and the time τ,
whereas the feed-forward signal (5) comprises a controller to forward a signal from the detection means (4), preferably the signal of the time τ, to the frequency shift means (6), and
whereas the frequency shift means (6) comprises a non-linear element in order to shift the idler-frequency mode fᵢ into a heralded photon frequency-mode fh.
**characterized in that,**
the apparatus comprises a frequency-to-time multiplexer (1) arranged between the photon pair generation means (2) and the detection means (4), in order to delay the signal photon by a time τ depending on the signal frequency-mode fₛ.
